# EUROPÄISCHE PATENTSCHRIFT

(11) **EP 4 268 568 B1**
(45) Veröffentlichungstag und Bekanntmachung des Hinweises auf die Patenterteilung: **10.12.2025**
(21) Anmeldenummer: 22170370.5
(22) Anmeldetag: 27.04.2022
(51) Int. Cl.: A01D 34/81, A01D 34/82, A01D 75/20, A01B 73/04

(54) **MÄHWERK**
MOWING DEVICE
BARRE DE COUPE

(43) Veröffentlichungstag der Anmeldung: 01.11.2023
(73) Patentinhaber: SIP Strojna Industrija d.d., 3311 Sempeter v Sav.dol. (SI)
(72) Erfinder: BOGATAJ, Sebastjan, 3303 Gomilsko (SI); KOCELI, Marko, 3310 alec (SI); RAKUN, Andrej, 3312 Prebold (SI); LOPAN, Damjan, 3304 Tabor (SI)
(74) Vertreter: Puschmann Borchert Kaiser Klettner Patentanwälte Partnerschaft mbB

(56) Entgegenhaltungen:
- EP-B1- 0 706 750
- US-A- 3 881 303
- US-A- 5 657 620
- US-A1- 2019 387 675
- US-B2- 10 912 248
- US-B2- 9 648 803

## Beschreibung

Die Erfindung betrifft ein Mähwerk gemäß den Merkmalen des Anspruchs 1 sowie eine landwirtschaftliche Maschine mit einem solchen Mähwerk.

Ein gattungsgemäßes getragenes Mähwerk ist beispielsweise aus der US 5,768,865 A1 bekannt. Diese weist eine Klappe in der Schutzabdeckung zur Wartung der darunter liegenden Schneideinrichtungen auf.

Die Klappe in der Schutzabdeckung hat einen großen Platzbedarf, so dass beispielsweise bei einer Schmetterlingsanordnung, bei der zwei Mähwerke über einen zweiarmigen Schwenkrahmen am Heck eines Traktors angebunden sind, in der Transportstellung der Zwischenbereich schwer zugänglich ist.

Aus der US 9 648 803 B2 ist ein auf Rädern gezogenes Mähwerk bekannt, das an seinem in Fahrtrichtung vorderen Ende eine Schutzabdeckung aufweist. Die Schutzabdeckung umfasst eine zweiteilige Klappenanordnung, die so geöffnet werden kann, dass sie unter der Deichsel Platz findet.

Die US 2019/387675 A1 offenbart eine auf Kufen bewegte Maschine, die an ihrem Gehäuse eine in Fahrtrichtung liegende Klappenanordnung aufweist. Die Klappenanordnung soll bei einer Kollision mit Hindernissen aufgeschoben werden, um auch den Schnitt höherer Sträucher, Bäume oder Ähnlichem zu ermöglichen.

Davon ausgehend ist es Aufgabe der Erfindung, ein getragenes Mähwerk zu verbessern, so dass die Handhabung und die Wartung des Mähwerks erleichtert werden und dennoch eine möglichst vollständige Abdeckung des Mähwerks gegeben ist-.

Die Aufgabe wird durch die Merkmale des Anspruchs 1 gelöst.

Die Unteransprüche stellen vorteilhafte Weiterbildungen der Erfindung dar.

In erfindungsgemäßer Weise, umfasst ein Mähwerk zum Betrieb an einer landwirtschaftlichen Maschine einen Mähwerksrahmen, eine Schutzabdeckung und wenigstens eine Schneidvorrichtung. Der Mähwerksrahmen weist eine Aufhängung zur Verbindung mit einem Tragarm auf, über den das Mähwerk von einem Traktor in Fahrtrichtung bewegt werden kann. Der Mähwerksrahmen trägt die Schneidvorrichtungen, wobei an dem Mähwerksrahmen vertikal oberhalb der Schneidvorrichtung die Schutzabdeckung angebunden ist, die in Arbeitsrichtung, welche regelmäßig in etwa Fahrtrichtung liegt, in einer Schürze endet.

Die Schürze erstreckt sich in der Arbeitsstellung des Mähwerks im Wesentlichen in vertikaler Richtung, um den Zugang zur Schneidvorrichtung zu erschweren.

Ferner umfasst die Schutzabdeckung, die sich im Wesentlichen horizontal erstreckt und die Schneidvorrichtungen vor von oben kommenden Einflüssen schützt, eine Hauptabdeckung und eine über ein Hauptscharnier mit der Hauptabdeckung verbundene Klappenanordnung. Durch Öffnen der Klappenanordnung wird der Zugang zu der Schneidvorrichtung ermöglicht, beispielsweise um diese warten zu können. Die mit der Klappenanordnung verbundene Schürze wird in diesem Zuge ebenfalls nach oben weggehoben.

Erfindungsgemäß weist die in Fahrtrichtung vor der Hauptabdeckung liegende, sich im Wesentlichen quer zur Arbeitsrichtung erstreckende Klappenanordnung einen ersten Klappenteil auf, der um eine Schwenkachse schwenkbar mit einem zweiten Klappenteil verbunden ist.

Durch die Aufteilung der Klappenanordnung in wenigstens zwei Klappenteile kann die Ausladung der Klappenanordnung, nämlich der Abstand des äußersten Teils der Klappenanordnung von der Scharnierachse, reduziert werden. Dies hat zur Folge, dass bei im Wesentlichen vertikal ausgerichteten Mähwerken in der Transportstellung sich zum einen der Öffnungswinkel der Klappenanordnung vergrößern kann und zum anderen durch die verringerte Ausladung der Klappenanordnung der Zugang zur Anbindungsmechanik, mit der das Mähwerk an den Traktor angebunden ist, verbessert wird.

Auch im Hinblick auf die Anbindung des Tragarms an das Mähwerk wirkt sich die erfindungsgemäße Gestaltung der Klappenanordnung positiv aus. Da bei der erfindungsgemäßen Ausgestaltung der zugänglich gemachte Raum nicht mehr ausschließlich vom Schwenkwinkel der Klappenanordnung abhängt, kann auch bei einem reduzierten Schwenkwinkel eine ausreichend große Revisionsöffnung bereitgestellt werden.

Dadurch wird die Flexibilität in der Gestaltung des Tragarms oder der Lage des Tragarms erhöht, wobei dennoch gute Wartungsmöglichkeiten erhalten bleiben.

Der zweite Klappenteil erstreckt sich, in Querrichtung gesehen, insbesondere über dieselbe Länge, wie der erste Klappenteil und damit bevorzugt über den Hauptanteil der Arbeitsbreite des Mähwerks. Dadurch kann mit einer Öffnung die gesamte Arbeitsbreite zugänglich gemacht werden.

Insbesondere ist der erste Klappenteil in einer ersten Drehrichtung gegenüber der Hauptabdeckung verschwenkbar und der zweite Klappenteil in einer der ersten Drehrichtung entgegengesetzten zweiten Drehrichtung gegenüber dem ersten Klappenteil verschwenkbar. Die Länge der zwei Klappenteile, also ihre Erstreckung entlang der Fahrtrichtung, ist insbesondere annähernd gleich. Dadurch wird die Ausladung bei zwei Klappenteilen minimiert.

Dadurch verbleibt die Schürze, insbesondere, wenn sie an der vorderen Kante befestigt ist, in derselben vertikalen Position wie in der Horizontallage, insbesondere, wenn beide Klappenteile gleich lang sind.

Die erste Drehrichtung kann so gewählt sein, dass der erste Klappenteil gegenüber der Hauptabdeckung nach oben, also vom Mähwerk weg, schwenkt. Dadurch kann der freie Raum unterhalb der Hauptabdeckung möglichst große gehalten werden.

Alternativ dazu kann der erste Klappenteil gegenüber der Hauptabdeckung auch nach unten schwenken. Dadurch gelangt beim Öffnen der Klappen kein Schmutz, der sich während des Mähens an der Unterseite der Klappenteile anhaften kann, zwischen die beiden Klappenteile,
Erfindungsgemäß weist das Hauptscharnier wenigstens einen Gelenkbügel auf, wodurch der erste Klappenteil schwenkbar mit der Hauptabdeckung verbunden ist, so dass ein Verschwenken desselben um die Hauptabdeckung herum ermöglicht ist. Dies ermöglicht, dass der erste Klappenteil von einer mit der Hauptabdeckung im Wesentlichen an seiner Oberseite bündigen geschlossenen Position in eine Öffnungsposition um einen Schwenkwinkel von mehr als 45° möglich ist. Die Schenkachse des Scharniers kann dabei geschützt unter der Hauptabdeckung liegen.

Der Gelenkbügel weist dazu bevorzugt zwei Schenkel auf, die ausgebildet sind, dass in der geöffneten Stellung die Hauptabdeckung zwischen den Schenkeln des Gelenkbügels zu liegen kommt. Über die Schenkellängen des Bügels kann der maximale Öffnungswinkel eingestellt werden. Der Gelenkbügel ist insbesondere c- bzw. u-förmig ausgebildet. Über die Breite der Klappenanordnung kann eine Mehrzahl von Gelenkbügeln angeordnet sein.

Die Scharnierachse zur Verbindung des ersten Klappenteils mit dem zweiten Klappenteil liegt parallel zur Scharnierachse des Hauptelementscharniers. Auf diese Weise können mit einer Klappbewegung beide Klappenteile zusammengelegt werden und gleichzeitig die Klappenanordnung geöffnet werden.

Gemäß einer vorteilhaften Weiterbildung kann der zweite Klappenteil gelenkig an ein erstes Ende einer Strebe angebunden sein und die Strebe an ihrem anderen Ende um ein Strebengelenk schwenkbar gelagert sein, wobei das Strebengelenk zur Scharnierachse des Hauptscharniers beabstandet angeordnet ist. Auf diese Weise erfolgen die Bewegung des zweiten Klappenteils und die Bewegung des ersten Klappenteils mechanisch gekoppelt in Abhängigkeit voneinander.

Der zweite Klappenteil kann über eine Mehrzahl von Streben angebunden sein.

Bevorzugt sind ein Gelenkbügel und eine Strebe paarweise an eine Scharnieraufnahme angebunden, wobei die Scharnieraufnahme und das Strebengelenk über ein Rahmenelement miteinander verbunden sind. Die Schwenkachsen des Strebengelenks und des Hauptscharniers liegen ebenfalls parallel zueinander.

Gemäß einer weiteren vorteilhaften Ausbildung der Erfindung ist die Aufhängung derart gestaltet, dass diese den Mähwerksrahmen an einen Tragarm anbindet, so dass die Schwenkachse der Aufhängung sich in Arbeitsrichtung erstreckt, wobei sich der Tragarm im Wesentlichen orthogonal zur Arbeitsrichtung erstreckt. Die Aufhängung kann dabei sehr weit vorne angeordnet werden, wobei dennoch eine ausreichende Öffnung der Klappenanordnung gewährleistet ist. Auch kann der Tragarm in seiner Ausgestaltung oder seiner Lage sich nahe an oder sogar in Arbeitsrichtung über das Hauptscharnier hinaus erstrecken, wodurch dennoch eine ausreichende Öffnung der Klappenanordnung gewährleistet werden kann. Auf diese Weise kann sowohl den Schutz- und Wartungsbedürfnissen als auch den statischen und dynamischen Anforderungen gleichermaßen Rechnung getragen werden.

Bevorzugt weist der Mähwerksrahmen Auflageelemente auf, auf welchen der erste und / oder der zweite Klappenteil aufliegen. Dadurch wird in der abgedeckten Position allein schon durch die Gewichtskraft der Klappenteile, die bevorzugt aus einem Stahlblech gefertigt sind, eine stabile Auflage der Klappenteile erreicht.

Ferner kann eine Arretiervorrichtung vorgesehen sein, die insbesondere am Mähwerksrahmen angebunden ist, über die der erste Klappenteil und / oder der zweite Klappenteil aufliegend auf den Auflageelementen arretierbar sind. Durch die Arretiervorrichtung kann eine Verspannung der Klappenteile gegen die Auflageelemente erfolgen, so dass eine Relativbewegung zwischen dem Mähwerksrahmen und den Klappenteilen reduziert und ein Klappern weitgehend verhindert wird. Auch kann die Klappenanordnung an einer unbeabsichtigten Öffnung gehindert werden. Die Sicherheit kann dadurch erhöht werden.

Bevorzugt kann der zweite Klappenteil bei geschlossener Klappenanordnung nach unten geneigt sein.

Der Vollständigkeit halber sei erwähnt, dass die Schneidvorrichtungen als Mähtrommel oder Mähscheibe oder Mähbalken ausgebildet sein können.

Gemäß einem weiteren Aspekt der Erfindung betrifft diese eine landwirtschaftliche Maschine umfassend einen Tragrahmen, insbesondere einen Anbaubock, zur Anbindung an einen Kraftheber eines Traktors. Zudem umfasst die landwirtschaftliche Maschine wenigstens einen seitlich, um eine insbesondere im Wesentlichen horizontal liegende Schwenkachse schwenkbar am Tragrahmen angeordneten Tragarm. Der Tragarm trägt ein zuvor beschriebenes erfindungsgemäßes Mähwerk trägt.

Der Tragarm ist von seiner horizontalen Arbeitsstellung in seine Transportposition schwenkbar die wenigstens in einer nahezu vertikalen Position bringbar liegt oder über die Vertikale hinaus geneigt.

Eine solche landwirtschaftliche Maschine gewährt eine gute Zugänglichkeit zu den Schneidvorrichtungen der Mähwerke und zum Tragrahmen in der Transportstellung bei geöffneter Schutzabdeckung.

Insbesondere umfasst die erfindungsgemäße landwirtschaftliche Maschine zwei beidseitig des Tragrahmens angeordnete Tragarme, wobei beide Tragarme aus einer annähernd vertikalen Transportstellung in eine annähernd horizontale Arbeitsstellung verschwenkbar sind.

Weitere Vorteile, Merkmale und Einsatzmöglichkeiten der vorliegenden Erfindung können der nachfolgenden Beschreibung in Verbindung mit den in den Zeichnungen dargestellten Ausführungsformen entnommen werden.

In der gesamten Beschreibung, den Ansprüchen und den Zeichnungen werden diese Begriffe und die zugehörigen Bezugszeichen verwendet, wie sie aus der beigefügten Liste der Bezugszeichen hervorgehen. In den Zeichnungen wird gezeigt
- Fig. 1a: eine schematische geschnittene Draufsicht auf ein an einen Traktor angebundenes Mähwerk nach dem Stand der Technik in Transportstellung;
- Fig. 1b: eine schematische geschnittene Draufsicht auf ein an einen Traktor angebundenes erfindungsgemäßes Mähwerk in Transportstellung;
- Fig. 2: eine perspektivische Ansicht eines landwirtschaftlichen Geräts in Arbeitsstellung mit zwei erfindungsgemäßen Mähwerken in einer Schmetterlings-Konfiguration;
- Fig. 3: eine Schnittansicht III-III der Fig. 2 bei geschlossener Schutzabdeckung;
- Fig. 4: eine Schnittansicht gemäß Fig. 3, wobei sich die Schutzabdeckung in einem halb aufgeklappten Zustand befindet; und
- Fig. 5: eine Schnittansicht gemäß Fig. 3, wobei sich die Schutzabdeckung in einem aufgeklappten Zustand befindet.

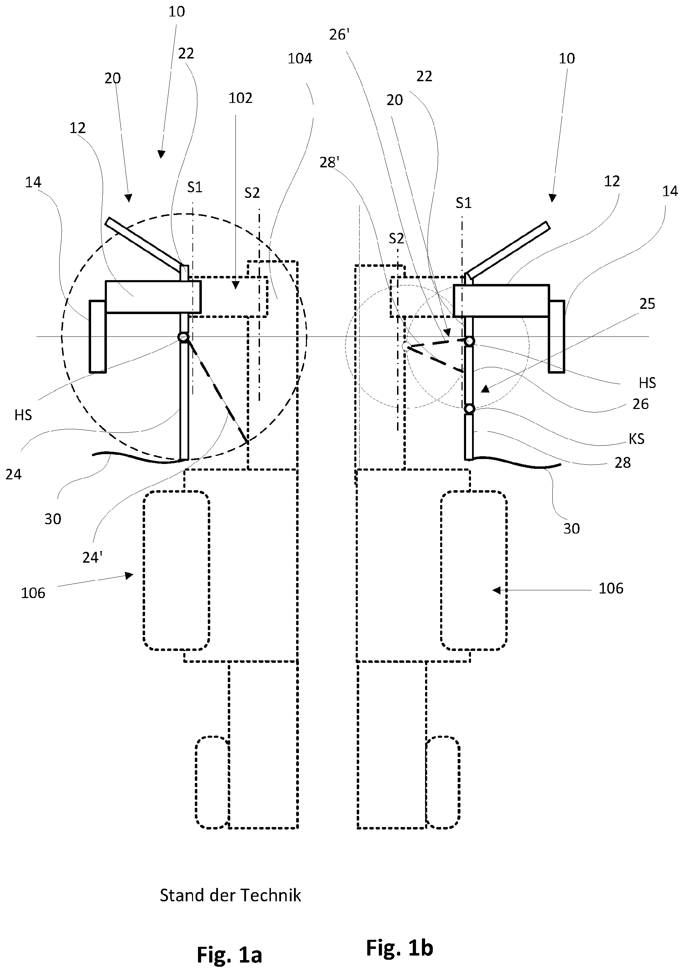

Fig. 1a zeigt in einer geschnittenen schematischen Darstellung ein Mähwerk 10 nach dem Stand der Technik, das von einem Tragarm 102' getragen ist, der schwenkbar an einen Zentralrahmen 104 angebunden ist, wobei der Zentralrahmen 104' von einer Zugmaschine, einem Traktor 106, getragen und über ein Feld bewegt wird. Das Mähwerk 10' befindet sich in dieser Darstellung in einer Transportposition, bei der sich der Tragarm 102' im Wesentlichen in Vertikalrichtung erstreckt. Fig. 1a zeigt die eine Hälfte einer, im Wesentlichen symmetrisch aufgebauten Schmetterlingsanordnung einer Mäheinrichtung mit zwei Mähwerken 10.

Üblicherweise ist der Tragarm um die Schwenkachse S2 an dem Zentralrahmen 104 gelagert, wobei das Mähwerk 10 über einen Aufhängepunkt um eine Schwenkachse S1 schwenkbar am Tragarm 102 aufgehängt ist.

Das Mähwerk 10 besteht wie üblich aus einem Mähwerksrahmen 12, der über den Aufhängepunkt an dem Tragarm 102 angebunden ist, und der die Mäheinrichtungen 14 trägt.

Die Mäheinrichtung 14 ist von einer Schutzabdeckung 20 abgedeckt, die mit dem Mähwerksrahmen 12 verbunden ist, und an ihrem vorderen Ende eine Schürze 30 aufweist. Die Schutzabdeckung 20 umfasst eine Hauptabdeckung 22, die im Wesentlichen starr an den Mähwerksrahmen 12 angebunden ist. Ferner umfasst die Schutzabdeckung 20 eine Klappe 24, die über ein Hauptscharnier HS, um eine Hauptscharnierachse schwenkbar, an der Hauptabdeckung 22 angebunden ist.

In Fig. 1a ist zu erkennen, dass die Klappe 24 den seitlichen Zugang zum Anbindungsbereich des Traktors 106 an den Zentralrahmen 104 erheblich beschränkt. Auch ein Öffnen der Klappe 24 führt nicht zu einer signifikanten Verbesserung des Zustandes, wie dies durch die Schwenkposition 24' der Klappe 24 dargestellt ist.

Fig. 1b zeigt analog zur Fig. 1a ebenfalls eine geschnittene schematische Darstellung eines Mähwerks 10 nach der Erfindung, das von einem Tragarm 102 getragen ist, der schwenkbar an einen Zentralrahmen 104 angebunden ist, wobei der Zentralrahmen 104 von einer Zugmaschine, einem Traktor 106, getragen und über ein Feld bewegt wird. Das Mähwerk 10 befindet sich in dieser Darstellung in einer Transportposition, bei der sich der Tragarm im Wesentlichen in Vertikalrichtung erstreckt. Fig. 1b zeigt die eine Hälfte einer, im Wesentlichen symmetrisch aufgebauten Schmetterlingsanordnung einer Mäheinrichtung 14 mit zwei erfindungsgemäßen Mähwerken 10.

Im Unterschied zur Ausführung gemäß dem Stand der Technik wie in Fig. 1a dargestellt, weist die an dem über das Hauptscharnier HS an die Hauptabdeckung 22 angeschlossene Klappenanordnung 25 einen ersten Klappenteil 26 und einen zweiten Klappenteil 28 auf, die gelenkig miteinander verbunden sind. Das vordere Ende des zweiten Klappenteils 28 ist mit einer Schürze 30 versehen, um den Frontaleingriff zu erschweren.

Die Schwenkpositionen 26', 28' der Klappenteile 26, 28 im aufgeklappten Zustand verdeutlichen das Wirkprinzip der erfindungsgemäßen Anordnung, wodurch eine verbesserte Zugänglichkeit des Anbindungsbereichs erreicht wird, da der Schwenkradius der Klappe 24 nur mehr durch die Ausdehnung des ersten Klappenteils 26 bestimmt wird.

Durch den geringeren Schwenkradius ergeben sich nicht nur Vorteile im Hinblick auf die Transportstellung, sondern auch in der Arbeitsstellung können abhängig von der Gestaltung und der Lage der Tragarme Vorteile erreicht werden.

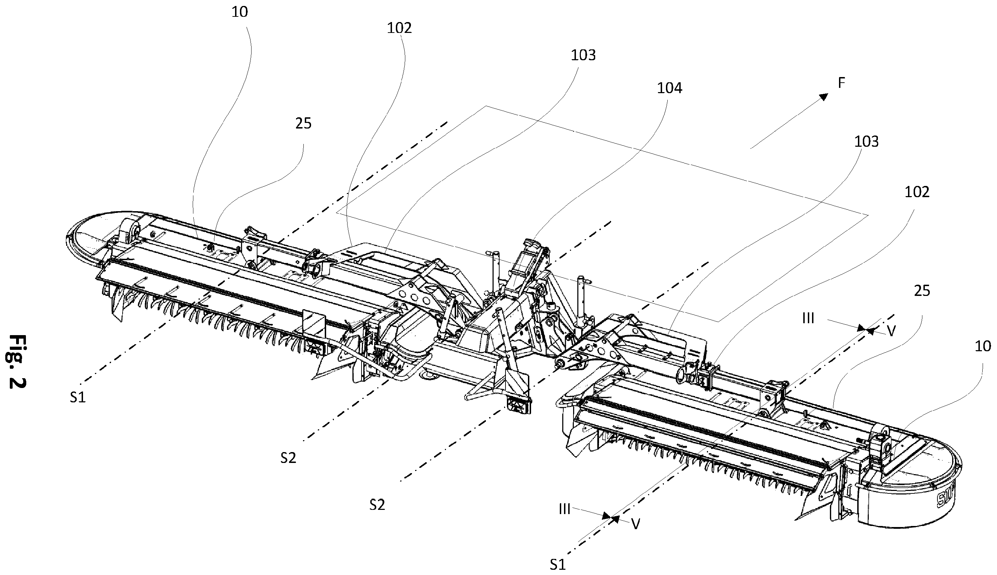

Fig. 2 zeigt eine perspektivische Ansicht einer Mähwerkseinrichtung in einer Schmetterlingskonfiguration mit zwei erfindungsgemäßen Mähwerken 10 in einer Arbeitsstellung, bei geschlossener Klappenanordnung 25, wobei die Lage der Schwenkachsen in dieser Darstellung nochmals verdeutlicht ist.

Der Tragarm 102 weist in dieser Ausführung Verstärkungsstreben 103 auf, die die Ausdehnung des Tragarms 102 in Fahrtrichtung vergrößern. Dadurch wird der Aufklappwinkel für eine Klappenanordnung 25beschränkt. Durch die erfindungsgemäße Ausgestaltung der Klappenanordnung 25 wird eine bessere Zugänglichkeit der Mäheinrichtungen bei geöffneter Klappenanordnung ermöglicht.

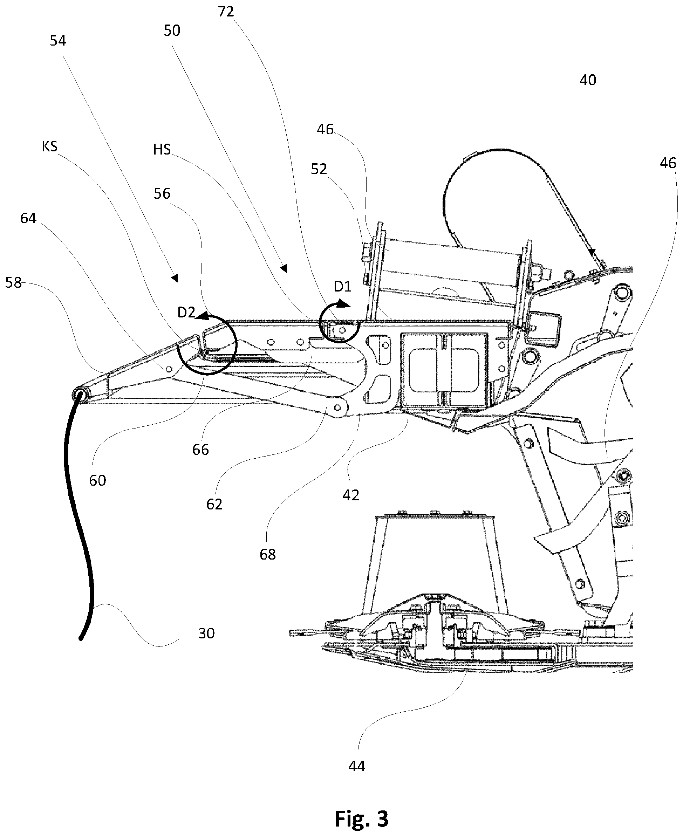

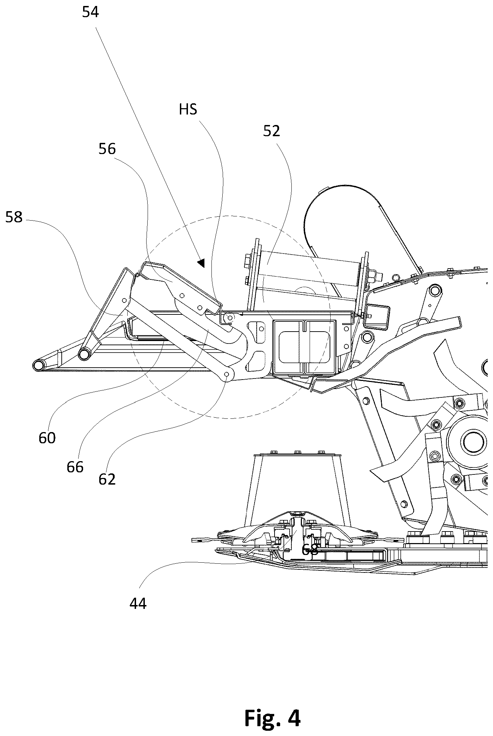

Dies wird in den Figuren 3 und 4 anhand der Schnittansicht III-III und Fig, 5 anhand der Schnittansicht V-V näher beschrieben, wobei die Klappenanordnung 25 in unterschiedlichen Klappstellungen gezeigt ist, sowie eine Ausführungsform eines erfindungsgemäßen Mähwerks.

Fig. 3 zeigt die Schnittansicht III-III ohne den Tragarm, wobei das Mähwerk 40 eine Mähvorrichtung 44 in der Form eines Scheibenmähbalkens aufweist. Der Scheibenmähbalken ist mit dem Mähwerksrahmen 42 verbunden und wird von diesem getragen. Ferner weist das Mähwerk 40 eine Aufhängung 46 auf, an der das Mähwerk 40 an einen Tragarm schwenkbar angebunden werden kann.

Der Mähwerksrahmen 42 ist nach oben hin mit einer Schutzabdeckung 50, umfassend eine Hauptabdeckung 52, abgedeckt. Die Hauptabdeckung 52 deckt im Wesentlichen den Bereich, der unmittelbar über dem Scheibenmähbalken liegt, ab. In Fahrtrichtung über den Scheibenmähbalken hinaus ist eine Klappenanordnung 54 angebunden. Diese umfasst erfindungsgemäß einen ersten Klappenteil 56 und einen zweiten Klappenteil 58.

Der erste Klappenteil 56 ist über ein Hauptscharnier HS so angelenkt, dass dieser gegenüber der Hauptabdeckung 52 in einer ersten Drehrichtung D1 verschwenkbar ist. In einer bevorzugten Ausführung wird der erste Klappenteil 56 über einen Gelenkbügel 66 angebunden, der mähwerksrahmenseitig um eine Gelenkachse des Hauptscharniers HS schwenkbar gegenüber dem Mähwerksrahmen 42 und damit auch gegenüber der Hauptabdeckung 52 ist.

Der Gelenkbügel 66 ist derart gestaltet, dass er den ersten Klappenteil 56 so anbindet, dass in der zugeklappten Position dessen Oberseite bündig mit der Oberseite der Hauptabdeckung 52 ist. Der zweite Klappenteil 58 ist über ein Klappenscharnier KS mit dem ersten Klappenteil 56 verbunden, so dass der zweite Klappenteil 58 relativ zum ersten Klappenteil 56 in einer der ersten Drehrichtung entgegengesetzten zweiten Drehrichtung D2 schwenkbar angebunden ist.

Ferner ist der zweite Klappenteil 58 über eine Strebe 60 mit einem Lagerrahmen 68 verbunden. Der Lagerrahmen 68 bildet zum einen ein Strebenlager 62 und zum anderen das Hauptscharnierlager 72 für das Hauptscharnier HS. Das Strebenlager 62 und das Hauptscharnierlager 72 sind im Lagerrahmen 68 so angeordnet, dass sie einen festen Abstand voneinander besitzen, wobei ihre Lagerachsen parallel zueinander ausgerichtet sind.

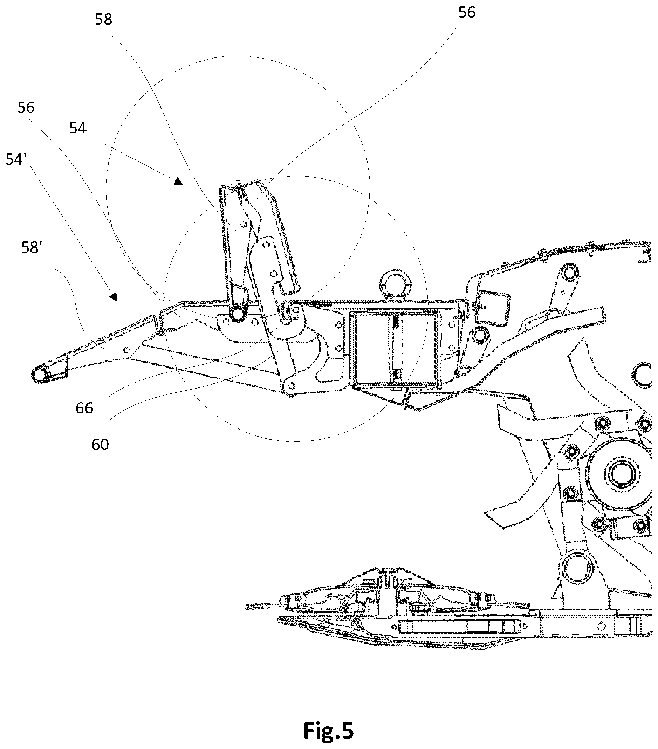

Der erste Klappenteil 56 und der zweite Klappenteil 58 führen durch diese viergelenkige Anbindung eine kombinierte Bewegung aus, so dass mit dem Aufklappen des ersten Klappenteils 56 gleichzeitig ein Abklappen des zweiten Klappenteils 58 erfolgt. Einzelne Öffnungspositionen sind in den Fig. 4 und Fig. 5 dargestellt.

So ist in Fig. 4, die eine Zwischenposition bei teilweise geöffneter Klappenanordnung zeigt, zu erkennen, dass der c-förmig geformte Gelenkbügel 66 durch den ersten Klappenteil 56 um die Hauptabdeckung 52 herumgeführt wird. Die Strebe 60 zwingt den zweiten Klappenteil 58 mit zunehmendem Öffnungswinkel des ersten Klappenteils 56 zum Abklappen nach unten.

Fig. 5 zeigt die Mähmaschine in der Schnittansicht V-V, wobei die Klappenanordnung 54 vollständig geöffnet ist. Es ist dargestellt, dass die Ausladung der Klappenanordnung 54 um die Hauptschwenkachse HS in etwa dem Abstand des vorderen Endes des ersten Klappenteils 56 von der Hauptschwenkachse HS entspricht. Der vordere zweite Klappenteil 58 entspricht in seiner Ausdehnung entlang der Fahrtrichtung in etwa der Ausdehnung des ersten Klappenteils 56, so dass bei geöffneter Klappenanordnung 54 der gesamte Raum zwischen dem Mähwerksrahmen und dem Mähwerk unter der vorderen Kante des zweiten Klappenteils 58 zugänglich ist.

Der Gelenkbügel 66 und die Strebe 60 sind in der Achsrichtung der Gelenkachsen versetzt angeordnet, so dass sie beim Aufklappen aneinander vorbeibewegt werden können.

Die Klappenanordnung 54 kann in der Öffnungsstellung arretiert werden. Jede Klappenanordnung 54, 54' kann wenigstens zwei Paare von Gelenkbügeln 66 und Streben 60 aufweisen. Dadurch wird eine verklemmungsfreie Öffnung der Klappenanordnung 54 erreicht. In der dargestellten Ausführungsform sind über die Breite des Mähwerks zwei Klappen 54, 54' angeordnet.

### Bezugszeichenliste

- 10: Mähwerk
- 12: Mähwerksrahmen
- 14: Mäheinrichtung
- 20: Schutzabdeckung
- 22: Hauptabdeckung
- 24: Klappe
- 24': Schwenkposition der Klappe
- 25: Klappenanordnung
- 26: erster Klappenteil
- 26': Schwenkposition des ersten Klappenteils
- 28: zweiter Klappenteil
- 28': Schwenkposition des zweiten Klappenteils
- 30: Schürze
- 40: Mähwerk
- 42: Mähwerksrahmen
- 44: Mähvorrichtung
- 46: Aufhängung
- 50: Schutzabdeckung
- 52: Hauptabdeckung
- 54, 54': Klappenanordnung
- 56: erster Klappenteil
- 58: zweiter Klappenteil
- 60: Strebe
- 62: Strebenlager
- 66: Gelenkbügel
- 68: Lagerrahmen
- 72: Hauptscharnierlager
- 102: Tragarm
- 104: Zentralrahmen
- 106: Traktor

- HS: Hauptscharnier / Hauptschwenkachse / Hauptelementscharnier
- KS: Klappenscharnier
- S1: Schwenkachse
- S2: Schwenkachse

## Patentansprüche

1. Mähwerk (10) zum Betrieb an einer landwirtschaftlichen Maschine, wobei das Mähwerk(10) einen Mähwerksrahmen (12), eine Schutzabdeckung und wenigstens eine Schneidvorrichtung (14, 44) umfasst, wobei der Mähwerksrahmen (12, 42) eine Aufhängung (46) zur Verbindung mit einem Tragarm aufweist, wobei der Mähwerksrahmen (12, 42) die Schneidvorrichtungen (14, 44) trägt, wobei an dem Mähwerksrahmen (12, 42) vertikal oberhalb der Schneidvorrichtung (14, 44) die Schutzabdeckung (20, 50) angebunden ist, die in Arbeitsrichtung in einer Schürze (30) endet, die sich in der Arbeitsstellung des Mähwerks (10, 40) im Wesentlichen in vertikaler Richtung erstreckt, wobei die Schutzabdeckung (20, 50) eine Hauptabdeckung (22, 52) und eine über ein Hauptscharnier (HS) mit der Hauptabdeckung (22, 52) verbundene Klappenanordnung (25, 54) umfasst, wobei die in Fahrtrichtung vor der Hauptabdeckung (22, 52) liegende, sich im Wesentlichen quer zur Arbeitsrichtung erstreckende Klappenanordnung (25, 54) einen ersten Klappenteil (26, 56) aufweist, der um eine Schwenkachse schwenkbar mit einem zweiten Klappenteil (28, 58) verbunden ist, wobei das Hauptscharnier (HS) wenigstens einen Gelenkbügel (66) umfasst, wodurch der erste Klappenteil (26, 56) schwenkbar mit der Hauptabdeckung (22, 52) verbunden ist, so dass ein Verschwenken desselben um die Hauptabdeckung (22, 52) herum ermöglicht ist.

2. Mähwerk nach Anspruch 1, **dadurch gekennzeichnet, dass** der erste Klappenteil (26, 56) in einer ersten Drehrichtung gegenüber der Hauptabdeckung (22, 52) verschwenkbar ist und der zweite Klappenteil in einer der ersten Drehrichtung entgegengesetzten Drehrichtung gegenüber dem ersten Klappenteil (26, 56) verschwenkbar ist.

3. Mähwerk nach Anspruch 2, **dadurch gekennzeichnet, dass** die erste Drehrichtung so gewählt ist, dass der erste Klappenteil (26, 56) von dem Mähwerk weg gegenüber der Hauptabdeckung nach oben verschwenkbar ist.

4. Mähwerk nach Anspruch 2, **dadurch gekennzeichnet, dass** die erste Drehrichtung so gewählt ist, dass der erste Klappenteil zum Mähwerk hin gegenüber der Hauptabdeckung nach unten verschwenkbar ist.

5. Mähwerk nach einem der vorangehenden Ansprüche, **dadurch gekennzeichnet, dass** der Gelenkbügel (66) zwei Schenkel aufweist und c-förmig ausgebildet ist, so dass in der geöffneten Stellung die Hauptabdeckung (52) zwischen den Schenkeln des Gelenkbügels (66) zu liegen kommt.

6. Mähwerk nach einem der vorangehenden Ansprüche, **dadurch gekennzeichnet, dass** der erste Klappenteil (26, 56) mit dem zweiten Klappenteil (28, 58) über ein Klappenscharnier (KS) verbunden ist, das eine Scharnierachse aufweist, die parallel zur Scharnierachse des Hauptelementscharniers (HS) liegt.

7. Mähwerk nach einem der vorangehenden Ansprüche, **dadurch gekennzeichnet, dass** der zweite Klappenteil gelenkig (28, 58) an ein erstes Ende einer Strebe (60), angebunden ist und die Strebe (60) an ihrem anderen Ende um eine Schwenkachse schwenkbar gelagert ist, wobei die Schwenkachse parallel zur Schwenkachse des Hauptscharniers (HS) liegt, so dass die Bewegung des zweiten Klappenteils (28, 58) und die Bewegung des ersten Klappenteils (26, 56) in Abhängigkeit voneinander erfolgen.

8. Mähwerk nach einem der vorangehenden Ansprüche, **dadurch gekennzeichnet, dass** die Schürze (30) als Plane oder Folie an dem zweiten Klappenteil (28, 58), insbesondere an der Oberseite des zweiten Klappenteils (28, 58), angebunden ist.

9. Mähwerk nach einem der vorangehenden Ansprüche, **dadurch gekennzeichnet, dass** die Aufhängung (46) eine Schwenkachse umfasst, die sich in Arbeitsrichtung erstreckt, wobei an die Aufhängung ein Tragarm angebunden werden kann, der sich im Wesentlichen orthogonal zur Arbeitsrichtung erstreckt.

10. Mähwerk nach einem der vorangehenden Ansprüche, **dadurch gekennzeichnet, dass** Auflageelemente mit dem Mähwerksrahmen verbunden sind, auf welchen der erste Klappenteil (26, 56) und der zweite Klappenteil (28, 58) aufliegen.

11. Mähwerk nach Anspruch 10, **dadurch gekennzeichnet, dass** eine Arretiervorrichtung am Mähwerksrahmen angebunden ist, über die der erste Klappenteil und / oder der zweite Klappenteil aufliegend auf den Auflageelementen arretierbar sind.

12. Mähwerk nach einem der vorangehenden Ansprüche, **dadurch gekennzeichnet, dass** die Schneidvorrichtungen als Mähtrommel oder Mähscheibe (44) oder Mähbalken ausgebildet sind.

13. Landwirtschaftliche Maschine umfassend einen Tragrahmen zur Anbindung an einen Kraftheber eines Traktors, weiter umfassend wenigstens einen seitlich, schwenkbar am Tragrahmen (104) angeordneten Tragarm (102), wobei der Tragarm (102) ein Mähwerk (10) nach einem der vorangehenden Ansprüche trägt, wobei der Tragarm (102) aus einer annähernd horizontalen Arbeitsstellung wenigstens bis zu einer annähernd vertikalen Transportstellung verschwenkbar ist.

14. Landwirtschaftliche Maschine nach Anspruch 13, **dadurch gekennzeichnet, dass** zwei Tragarme (102), jeweils ein Mähwerk (10) tragend, beidseitig am Tragrahmen (104) angebunden sind.

## Claims

1. Mower unit (10) for use on an agricultural machine, which mower unit (10) comprises a mower frame (12), a protective cover and at least one cutting device (14, 44), wherein the mower frame (12, 42) has a suspension (46) for connection to a support arm, wherein the mower frame (12, 42) carries the cutting devices (14, 44), wherein the protective cover (20, 50) is attached to the mower frame (12, 42) vertically above the cutting device (14, 44), which cover terminates, in the working direction, in a skirt (30) that extends substantially in the vertical direction in the working position of the mower unit (10, 40), wherein the protective cover (20, 50) comprises a main cover (22, 52) and a flap arrangement (25, 54) connected to the main cover (22, 52) via a main hinge (HS), wherein the flap arrangement (25, 54), which is located in front of the main cover (22, 52) in the direction of travel and extends substantially transversely to the working direction, has a first flap part (26, 56), which is connected to a second flap part (28, 58) so that it can be pivoted about a pivot axis, wherein the main hinge (HS) comprises at least one hinged bracket (66), via which the first flap part (26, 56) is pivotally connected to the main cover (22, 52), thus making it possible to pivot the same about the main cover (22, 52).

2. Mower unit according to claim 1, **characterized in that** the first flap part (26, 56) is adapted to be pivoted relative to the main cover (22, 52) in a first direction of rotation, and the second flap part is adapted to be pivoted relative to the first flap part (26, 56) in a direction of rotation opposite to the first direction of rotation.

3. Mower unit according to claim 2, **characterized in that** the first direction of rotation is selected such that the first flap part (26, 56) can be pivoted upwards away from the mower unit relative to the main cover.

4. Mower unit according to claim 2, **characterized in that** the first direction of rotation is selected in such a way that the first flap part can be pivoted downwards towards the mower unit in relation to the main cover.

5. Mower unit according to any one of the preceding claims, **characterized in that** the hinged bracket (66) has two legs and is C-shaped, resulting **in that**, in the open position, the main cover (52) comes to lie between the legs of the hinged bracket (66).

6. Mower unit according to any one of the preceding claims, **characterized in that** the first flap part (26, 56) is connected to the second flap part (28, 58) via a flap hinge (KS) which has a hinge axis that is parallel to the hinge axis of the main element hinge (HS).

7. Mower unit according to any one of the preceding claims, **characterized in that** the second flap part (28, 58) is connected in an articulated manner to a first end of a strut (60), and the strut (60) is mounted at its other end so that it can be pivoted about a pivot axis, the pivot axis lying parallel to the pivot axis of the main hinge (HS), so that the movement of the second flap part (28, 58) and the movement of the first flap part (26, 56) are interdependent.

8. Mower unit according to any one of the preceding claims, **characterized in that** the apron (30) is attached to the second flap part (28, 58), in particular to the upper side of the second flap part (28, 58), in the form of a tarpaulin or foil.

9. Mower unit according to any one of the preceding claims, **characterized in that** the suspension (46) comprises a pivot axis which extends in the working direction, wherein a support arm can be connected to the suspension which extends substantially orthogonally to the working direction.

10. Mower unit according to any one of the preceding claims, **characterized in that** support elements are connected to the mower frame, on which the first flap part (26, 56) and the second flap part (28, 58) rest.

11. Mower unit according to claim 10, **characterized in that** a locking device is attached to the mower frame, by means of which the first flap part and/or the second flap part can be locked in position resting on the support elements.

12. Mower unit according to any one of the preceding claims, **characterized in that** the cutting devices are designed as a mower drum or a mower disc (44) or as a cutter bar.

13. Agricultural machine comprising a support frame for connection to a power lift of a tractor, further comprising at least one support arm (102) arranged laterally and pivotally on the support frame (104), wherein the support arm (102) carries a mower unit (10) of the type specified in any one of the preceding claims, wherein the support arm (102) is adapted to be pivoted from an approximately horizontal working position at least up to an approximately vertical transport position.

14. Agricultural machine according to claim 13, **characterized in that** two support arms (102), each carrying a mower unit (10), are connected to the support frame (104) on either side thereof.

## Revendications

1. Mécanisme de coupe (10) pour un fonctionnement sur une machine agricole, dans lequel le mécanisme de coupe (10) comprend un cadre de mécanisme de coupe (12), un couvercle de protection et au moins un dispositif de coupe (14, 44), dans lequel le cadre de mécanisme de coupe (12, 42) présente une suspension (46) pour la liaison à un bras de support, dans lequel le cadre de mécanisme de coupe (12, 42) porte les dispositifs de coupe (14, 44), dans lequel le couvercle de protection (20, 50) est raccordé au cadre de mécanisme de coupe (12, 42) verticalement au-dessus du dispositif de coupe (14, 44), le couvercle de protection (20, 50) se terminant dans la direction de travail dans un tablier (30) qui s'étend dans la position de travail du mécanisme de coupe (10, 40) sensiblement dans la direction verticale, dans lequel le couvercle de protection (20, 50) comprend un couvercle principal (22, 52) et un ensemble à clapet (25, 54) relié au couvercle principal (22, 52) par l'intermédiaire d'une charnière principale (HS), dans lequel l'ensemble à clapet (25, 54) situé dans le sens de marche devant le couvercle principal (22, 52), s'étendant sensiblement transversalement par rapport à la direction de travail présente une première partie de clapet (26, 56) qui est reliée à une deuxième partie de clapet (28, 58) de manière à pouvoir pivoter autour d'un axe de pivotement, dans lequel la charnière principale (HS) comprend au moins un étrier articulé (66), ce qui a pour effet que la première partie de clapet (26, 56) est reliée de manière pivotante au couvercle principal (22, 52), de sorte qu'un pivotement de celle-ci autour du couvercle principal (22, 52) est permis.

2. Mécanisme de coupe selon la revendication 1, **caractérisé en ce que** la première partie de clapet (26, 56) peut pivoter dans un premier sens de rotation par rapport au couvercle principal (22, 52) et la deuxième partie de clapet peut pivoter dans un sens de rotation opposé au premier sens de rotation par rapport à la première partie de clapet (26, 56).

3. Mécanisme de coupe selon la revendication 2, **caractérisé en ce que** le premier sens de rotation est choisi de sorte que la première partie de clapet (26, 56) peut pivoter vers le haut en éloignement du mécanisme de coupe par rapport au couvercle principal.

4. Mécanisme de coupe selon la revendication 2, **caractérisé en ce que** le premier sens de rotation est choisi de sorte que la première partie de clapet peut pivoter vers le bas en direction du mécanisme de coupe par rapport au couvercle principal.

5. Mécanisme de coupe selon l'une quelconque des revendications précédentes, **caractérisé en ce que** l'étrier articulé (66) présente deux branches et est réalisé en forme de c, de sorte que dans la position ouverte le couvercle principal (52) vient se placer entre les branches de l'étrier articulé (66).

6. Mécanisme de coupe selon l'une quelconque des revendications précédentes, **caractérisé en ce que** la première partie de clapet (26, 56) est reliée à la deuxième partie de clapet (28, 58) par l'intermédiaire d'une charnière de clapet (KS), qui présente un axe de charnière qui est disposé parallèlement à l'axe de charnière de la charnière d'élément principal (HS).

7. Mécanisme de coupe selon l'une quelconque des revendications précédentes, **caractérisé en ce que** la deuxième partie de clapet (28, 58) est raccordée de manière articulée à une première extrémité d'une traverse (60) et la traverse (60) est montée à son autre extrémité de manière à pouvoir pivoter autour d'un axe de pivotement, dans lequel l'axe de pivotement est disposé parallèlement à l'axe de pivotement de la charnière principale (HS), de sorte que le mouvement de la deuxième partie de clapet (28, 58) et le mouvement de la première partie de clapet (26, 56) s'effectuent en fonction l'un de l'autre.

8. Mécanisme de coupe selon l'une quelconque des revendications précédentes, **caractérisé en ce que** le tablier (30) est raccordé à la deuxième partie de clapet (28, 58) en tant que bâche ou film, en particulier à la face supérieure de la deuxième partie de clapet (28, 58).

9. Mécanisme de coupe selon l'une quelconque des revendications précédentes, **caractérisé en ce que** la suspension (46) comprend un axe de pivotement qui s'étend dans la direction de travail, dans lequel un bras de support, qui s'étend sensiblement perpendiculairement à la direction de travail, peut être raccordé à la suspension.

10. Mécanisme de coupe selon l'une quelconque des revendications précédentes, **caractérisé en ce que** des éléments d'appui, sur lesquels reposent la première partie de clapet (26, 56) et la deuxième partie de clapet (28, 58), sont reliés au cadre de mécanisme de coupe.

11. Mécanisme de coupe selon la revendication 10, **caractérisé en ce qu'**un dispositif de blocage, par l'intermédiaire duquel la première partie de clapet et/ou la deuxième partie de clapet peuvent être bloquées en appui sur les éléments d'appui, est raccordé au cadre de mécanisme de coupe.

12. Mécanisme de coupe selon l'une quelconque des revendications précédentes, **caractérisé en ce que** les dispositifs de coupe sont réalisés en tant que tambour de coupe ou disque de coupe (44) ou barre de coupe.

13. Machine agricole comprenant un cadre de support à raccorder à un attelage d'un tracteur, comprenant en outre au moins un bras de support (102) disposé latéralement, de manière pivotante sur le cadre de support (104), dans lequel le bras de support (102) porte un mécanisme de coupe (10) selon l'une quelconque des revendications précédentes, dans laquelle le bras de support (102) peut pivoter à partir d'une position de travail à peu près horizontale au moins jusqu'à une position de transport à peu près verticale.

14. Machine agricole selon la revendication 13, **caractérisée en ce que** deux bras de support (102), portant respectivement un mécanisme de coupe (10), sont raccordés des deux côtés au cadre de support (104).
